# EUROPÄISCHE PATENTANMELDUNG

(11) **EP 4 776 491 A1**
(43) Veröffentlichungstag der Anmeldung: **15.07.2026**
(21) Anmeldenummer: 25150977.4
(22) Anmeldetag: 09.01.2025
(51) Int. Cl.: H02K 15/0643, H02K 15/40, H02K 21/24, H02K 15/066

(54) **AXIALFLUSSMASCHINE**

(71) Anmelder: Miba eMobility GmbH, 4663 Laakirchen (AT)
(72) Erfinder: Miesbauer, Robert, 4663 Laakirchen (AT)
(74) Vertreter: Harringer, Thomas

(57) **Zusammenfassung**

Die Erfindung betrifft eine Axialflussmaschine mit einem entlang einer Zentralachse neben einem Stator angeordneten und um die Zentralachse drehbar ausgeführten Rotor, und wobei der Stator ein scheibenförmiges Statorjoch und mehrere mit dem Statorjoch verbundene Statorzähne aufweist, wobei die Statorzähne auf der dem Rotor zugewandten Seite des Statorjochs angeordnet sind und durch eine Vielzahl von umfänglich verteilten Aufnahmenuten voneinander getrennt sind, und eine Vielzahl an Wicklungssegmenten in den Aufnahmenuten angeordnet sind.

## Beschreibung

Die Erfindung betrifft eine Axialflussmaschine mit einem entlang einer Zentralachse neben einem Stator angeordneten und um die Zentralachse drehbar ausgeführten Rotor, und wobei der Stator ein scheibenförmiges Statorjoch und mehrere mit dem Statorjoch verbundene Statorzähne aufweist, wobei die Statorzähne auf der dem Rotor zugewandten Seite des Statorjochs angeordnet sind und durch eine Vielzahl von umfänglich verteilten Aufnahmenuten voneinander getrennt sind, und eine Vielzahl an Wicklungssegmenten in den Aufnahmenuten angeordnet sind.

Aus dem Stand derTechnik sind verschiedene Ausführungen von Axialflussmaschinen bekannt. Beispielsweise sind aus den Veröffentlichungen WO2021003509A1 und DE102019000666A1 Axialflussmaschinen in der Konfiguration mit einem oder mehreren Statoren, Statorrückschlüssen und einem oder mehreren Rotoren bekannt.

Viele Axialflussmotoren sind mit konzentrierten Wicklungen ausgestattet, diese haben jedoch häufig den Nachteil, dass derartige Wicklungen höhere Anteile höherer Harmonischer aufweisen, was zu elektromagnetischen Verlusten führt. Eine Möglichkeit die Anteile höherer Harmonischer zu reduzieren ist, anstatt auf eine konzentrierte Wicklung auf eine verteilte Wicklungsauslegung zu setzen.

Ein Axialflussmotor mit einer verteilte Wicklung mit reduzierten Raumharmonischen ist beispielsweise in der DE102020127228A1 offenbart. Diese zeigt einen Stator einer Axialflussmaschine umfassend eine Vielzahl von elektromagnetischen Komponenten, die eine Vielzahl von Magnetpolen definieren. Die elektromagnetischen Komponenten umfassen eine Vielzahl von Pfosten, eine Vielzahl von Nuten und eine Vielzahl von verteilten elektrisch leitenden Wicklungen, die in nicht benachbarten Nuten aus der Vielzahl von Nuten angeordnet sind und sich über diese erstrecken.

Eine in Radialflussmaschinen geläufige und gut automatisierbare Variante zur Herstellung von verteilten Wicklungen ist die sogenannte "Hairpin-Wicklung", bei der eine Statorwicklung aus einer Vielzahl an U-förmigen Formstäben besteht, deren freie Enden nach dem Fügen in ein Blechpaket, geeignet verformt und kontaktiert werden. Derartige Statorwicklungen und die damit verbundenen Herstellungsabläufe im Zusammenhang mit Radialflussmaschinen sind aus einer Vielzahl an Schriften bekannt. Beispielsweise sei hier die US11081922B2 und die US20130221773A1 genannt.

Die Möglichkeit "Hairpin-Wicklungen" in Axialflussmotoren einzusetzen, wird auch in der DE102020127228A1 erwähnt, die Offenbarungen sind jedoch für eine gute Herstellbarkeit - bzw. Automatisierbarkeit des Herstellungsverfahren ungeeignet, beispielsweise in Anbetracht der ungenügenden Zugänglichkeit der Schweiß-bzw. Kontaktierungspunkte.

Es stellt sich demnach dem Fachmann aus dem Stand der Technik die Aufgabe, eine zur Serienfertigung geeignete leistungsfähige Axialflussmaschine mit verteilter Statorwicklung und ein Verfahren hierzu basierend auf Hairpin-Technologien zu entwickeln.

Diese technische Aufgabe wird durch den kennzeichnenden Teil des Anspruch 1 bzw. durch das Verfahren nach Anspruch 8 gelöst.

Eine mögliche Ausführungsform einer erfindungsgemäßen Axialflussmaschine weist hierbei einen entlang einer Zentralachse neben einem Stator angeordneten und um die Zentralachse drehbar ausgeführten Rotor auf. Der Stator weist dabei ein scheibenförmiges Statorjoch und mehrere mit dem Statorjoch verbundene Statorzähne auf. Die Statorzähne sind hierbei auf der dem Rotor zugewandten Seite des Statorjochs angeordnet und durch eine Vielzahl von umfänglich verteilten Aufnahmenuten voneinander getrennt. In den Aufnahmenuten sind zudem eine Vielzahl an Wicklungssegmenten in den Aufnahmenuten angeordnet. Des Weiteren umfasst ein Wicklungssegment jeweils zwei geradlinige Leiterabschnitten, die in unterschiedlichen Aufnahmenuten angeordnet sind. Diese Leiterabschnitte weisen nach dem radialen Austritt aus den Aufnahmenuten jeweils einen ersten, radial inneren, und zweiten, radial äußeren, axial verlaufenden Verbindungabschnitt auf. Zudem weist jedes Wicklungssegment einen umfänglich verlaufenden Dachbereich zwischen entweder den jeweils ersten oder jeweils zweiten Verbindungsabschnitten auf, wobei jedes Wicklungssegment in den jeweils gegenüberliegenden Verbindungsabschnitten in teilweise umfänglich verlaufende Verschaltungsabschnitte endet. Darüber hinaus werden die teilweise umfänglich verlaufenden Verschaltungsabschnitte verschiedener Wicklungssegmente derart miteinander verschaltet, dass sich eine verteilte Statorwicklung ausbildet.

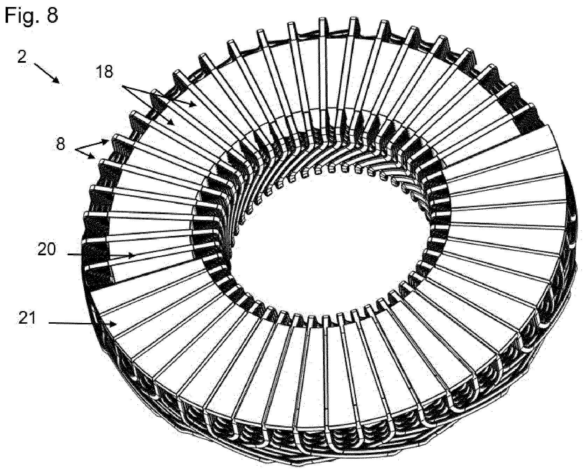

Der Dachbereich weist hierbei üblicherweise zur Ausbildung des "Daches" auch eine axiale Erstreckung bzw. Biegung aus, siehe beispielsweise auch Fig. 8 Referenz 11. Jedoch sind auch Ausführungsformen denkbar, bei denen der Dachbereich rein umfänglich verlaufend ist.

Diese Ausführungsform bringt mehrere Vorteile mit sich, beispielsweise ist für eine Serienfertigung geeignete Automatisierbarkeit des Herstellungsverfahren gegeben, beispielsweise durch eine verbesserte Zugänglichkeit der Schweiß-bzw. Kontaktierungspunkte aufgrund der axialen Verbindungsabschnitte bzw. der "axialen Knicks" der Wicklungssegmente. Eine bessere Automatisierbarkeit ergibt sich auch darüber, dass für die Herstellung der Wicklungssegmente in der dargelegten Ausführungsform bekannte und gut automatisierbare Prozesse für Hairpinwicklungen genutzt werden können. So kann beispielsweise ein Hairpin mit bekannten Herstellungsverfahren (beispielsweise Gesenk- und/oder Freiformbiegen) produziert werden und die dargelegte Ausführungsform einfach darüber erreicht werden, dass in dem Schenkelbereich des Hairpins die "axialen Knicke" bzw. die axialen Verbindungsabschnitte eingebracht werden. Danach können die Hairpins beispielsweise in einer Vorrichtung assembliert werden und die zuvor beschriebenen Verschaltungsabschnitte über einen Twist/Verschränkungsprozess ausgebildet werden. Der Twist/Verschränkungsprozess ist ein dem Fachmann bekannter Biegeprozess, bei dem es üblicherweise zu einer tangentialen Biegung der Hairpinenden in Bezug auf die Zentralachse des Stators kommt. Diese Nutzung von etablierten Prozessen für Hairpinwicklungen, die bisher üblicherweise nur bei Radialflussmaschinen zum Einsatz kommen, erlaubt eine Umsetzung der oben dargelegten Ausführungsform mit minimalen Automatisierungskosten, da beispielsweise der bereits bestehende Maschinenpark für die Produktion von Hairpin-Statorwicklungen genutzt werden kann.

Es kann sich hierbei sowohl um eine Synchron- als auch eine Asynchronmaschine handeln. Insbesondere Asynchronmaschinen profitieren vom verbesserten Verhalten hinsichtlich der Anteile höherer Harmonischer bei verteilten Statorwicklungen im Vergleich zu konzentrierten Statorwicklungen. Bei einer Asynchronmaschine kann der Rotor beispielsweise als gestanzter Käfig ausgeführt sein, aber auch andere, dem Fachmann geläufige, Varianten sind möglich. Bei Synchronmaschinen kann es sich beispielsweise um permanenterregte Synchronmaschinen handeln, bei denen der Rotor mit Permanentmagneten bestückt ist. Auch hier sind verschiedene, dem Fachmann geläufige, Ausführungsvarianten von Synchronmaschinen denkbar.

In einer weiteren möglichen Ausführungsform der Axialflussmaschine sind in manchen der Aufnahmenuten darüber hinaus Kontaktierungssegmente angeordnet. Die Kontaktierungssegmente umfassen einen geradlinigen Leiterabschnitten, der in einer der Aufnahmenuten angeordnet ist, und wobei der Leiterabschnitt nach dem radialen Austritt aus den Aufnahmenuten jeweils einen ersten, radial inneren, und zweiten, radial äußeren, axial verlaufenden Verbindungabschnitt aufweist. Einer der Verbindungsabschnitten endet in einem teilweise umfänglich verlaufende Verschaltungsabschnitte und wobei der andere Verbindungsabschnitt endet in einem teilweise umfänglich verlaufende Kontaktierungsabschnitt. Die teilweise umfänglich verlaufenden Verschaltungsabschnitte der Kontaktierungssegmente werden mit den Verschaltungsabschnitten der Wicklungssegmente derart verschaltet, dass sich eine verteilte Statorwicklung ausbildet.

In einer weiteren möglichen Ausführungsform der Axialflussmaschine weist der scheibenförmige Stator dabei einen Innendurchmesser und einen Außendurchmesser auf und alle umfänglich verlaufenden Dachbereiche sind entweder im Bereich des Innendurchmesser oder im Bereich des Außendurchmessers des Stators angeordnet. Hingegen sind alle Verschaltungsabschnitte jeweils im Bereich des entgegengesetzten Durchmessers angeordnet. Dabei können auch insbesondere die umfänglich verlaufenden Dachbereiche und die Kontaktierungsabschnitte der Kontaktierungssegmente im jeweils selben Bereich angeordnet sein. Mit "im Bereich des Innendurchmessers" bzw. im "Bereich des Außendurchmessers" ist damit gemeint, dass die Dachbereiche bzw. Verschaltungsabschnitt nicht strikt am Außendurchmesser bzw. Innendurchmesser angeordnet sind, sondern den Außendurchmesser des Statorjochs überschreiten bzw. den Innendurchmessers des Statorjochs unterschreiten können.

Der Vorteil der Anordnung aller Verschaltungsabschnitte im Bereich entweder des Innen- oder Außendurchmessers liegt darin, dass darüber die Automatisierbarkeit des Verschaltungsprozess erheblich verbessert wird. Insbesondere günstig ist auch die Ausbildung einer "gleichmäßigen" Verschaltungsseite, bei der die Abstände zwischen Verschaltungsabschnitten bzw. zu kontaktierenden Verschaltungsabschnittspaaren gleich groß ist und zwischen den verschiedenen Verschaltungsabschnittspaaren kein/nur ein geringer Höhenunterschied (innerhalb eines gewissen Toleranzbereichs in Abhängigkeit des Kontaktierungsverfahrens) existiert. Hierbei lässt sich die automatisierte Verschaltung besonders einfach realisieren.

In einer weiteren möglichen Ausführungsform der Axialflussmaschine sind, an der dem Rotor zugewandten Seite der Statorzähne, eine Vielzahl an Flusssammelelementen angeordnet. Dabei decken die Flusssammelelemente die Vielzahl an Wicklungssegmenten zumindest teilweise zum Rotor hin ab. Insbesondere können dabei die Flusssammelelemente einen Außendurchmesser des Statorjochs überragen. Über den Einsatz von Flusssammelelementen kann der magnetischen Fluss fokussiert und der Wirkungsgrad der elektrischen Maschine erheblich verbessert werden. Als Flusssammelelemente bieten sich dabei insbesondere SMC-Bauteile ("Soft Magnetic Composite"-Bauteile) an.

In einer weiteren möglichen Ausführungsform der Axialflussmaschine erstrecken sich die umfänglich verlaufenden Dachbereiche und die teilweise umfänglich verlaufenden Verschaltungsabschnitte axial zur dem Rotor abgewandten Seite des Stators. Dabei kann insbesondere auch vorgesehen sein, dass die Dachbereich und die Verschaltungsabschnitte das Statorjoch auf dieser Seite axial überragen.

Dies hat den Vorteil einer besonders guten Zugänglichkeit beim Verschalten der Verschaltungsabschnitte - beispielsweise eine gute optische Zugänglichkeit beim Laserschweißen.

In einer weiteren möglichen Ausführungsform der Axialflussmaschine sind die Aufnahmenuten in Bezug auf die Zentralachse radial schräg angeordnet sind. Dabei kann insbesondere vorgesehen sein, dass die Schrägung der Aufnahmenuten derart ausfällt, dass ein Nutversatz von 1 bis 3 Nuten, im Vergleich zu einer radial diametralen Nutposition bei, in Bezug auf die Zentralachse, radial verlaufenden Aufnahmenuten entsteht.

Derartige Nutschrägungen sind bei Radialflussmaschinen normalerweise nur für Runddrahtwicklungen, nicht aber für Hairpinwicklungen umsetzbar. In einer Axialflussmaschine hingegen ist eine solche Nutschrägung jedoch auch mit den offenbarten Wicklungssegmenten bzw. "Hairpins" möglich. Diese Nutschrägung führt zu einer signifikanten Verbesserung der Axialflussmaschine beim Nutrasten bzw. bei Torque-Ripple Effekten.

In einer weiteren möglichen Ausführungsform der Axialflussmaschine bilden die Wicklungssegmente durch vorbestimmte elektrische Verbindungen eine Statorwicklung aus. Diese Statorwicklung umfasst mehrere in Axialrichtung zur Zentralachse unmittelbar benachbarte Lagen aus den, in den Aufnahmenuten angeordneten, Leiterabschnitten. Diese Leiterabschnitte bilden durch die vorbestimmten elektrischen Verbindungen vorbestimmte elektrische Strompfade in der Statorwicklung aus, und der Stator definiert in Kreisumfangsrichtung verteilt mehrere magnetische Polabschnitte. Die Statorwicklung umfasst wenigstens eine Phasenwicklung, welche wenigstens eine Phasenwicklung zumindest einen Strompfad umfasst, und der Strompfad einen, durch die Kontaktierungsabschnitte der Kontaktierungssegmente gebildeten, Eingangsanschluss, einen Strompfad-Anfang, ein Strompfad-Ende und einen Ausgangsanschluss aufweist. Der Strompfad beginnt mit seinem Strompfad-Anfang ausgehend von einer der axial äußeren Lagen und verläuft sodann lagenweise wechselnd sowie in Kreisumfangsrichtung wenigstens über einen Teilabschnitt des Kreisumfanges des Stators verlaufend bis zur axial innersten Lage. Der Strompfad geht bei jedem dieser Lagenwechsel von einem der magnetischen Polabschnitte (S oder N) des Stators zu einem in Kreisumfangsrichtung unmittelbar benachbarten Polabschnitt (N oder S) über, und der Strompfad wechselt dabei die Lagen in fortwährend gleichbleibender axialer Richtung um eine Lagensprungweite "Eins" bis die axial innerste Lage erreicht ist. Insbesondere kann der Strompfad hierbei in Bezug auf die Kreisumfangs- und Axialrichtung des Stators einen stufenförmigen Verlauf aufweisen.. Die Verlaufsrichtung des elektrischen Strompfades wird bei der axial innersten Lage in Bezug auf die Kreisumfangsrichtung durch einen Umkehrungs-Leiterabschnitt umgekehrt und sodann der elektrische Strompfad ausgehend von der axial innersten Lage die Lagen lagenweise wechselnd sowie in Kreisumfangsrichtung wenigstens über einen Teilabschnitt des Kreisumfanges des Stators verlaufend und dabei in axialer Richtung um nur eine Lage versetzt zurück in Richtung zu einer axial weiter außen liegenden Lage verläuft. Insbesondere kann der Strompfad demnach wiederum einen stufenförmigen Verlauf in Bezug auf die Kreisumfangs- und Axialrichtung des Stators aufweisen. Der Strompfad kann insbesondere auch wenigstens einen stufenförmigen Verlauf in Axialrichtung zu der Zentralachse und zudem wenigstens einen stufenförmigen Verlauf in Axialrichtung weg von der Zentralachse aufweisen, - oder vice versa bezüglich des stufenförmigen Verlaufes von wenigstens einem Strompfad in Bezug auf die Axialrichtung zur Zentralachse.

Eine mögliche, erfindungsgemäßen Verfahrensvariante zur Herstellung einer Axialflussmaschine umfasst die folgenden Schritte:
a) Bereitstellen von geraden Formstäben mit rechteckigem Querschnitt mit zwei ersten gegenüberliegenden und zwei zweiten gegenüberliegenden Seitenflächen.
b) Bereitstellen eines Stator, welcher ein scheibenförmiges Statorjoch und mehrere mit dem Statorjoch verbundene Statorzähne aufweist, wobei die Statorzähne auf einer Stirnseite des Statorjochs angeordnet sind und durch eine Vielzahl von umfänglich verteilten Aufnahmenuten voneinander getrennt sind.
c) Biegen der Formstäbe zu Wicklungssegmenten derart, dass die Wicklungssegmente einen ersten und einen zweiten geradlinigen Leiterabschnitt aufweisen. Die geradlinig verlaufenden Leiterabschnitte sind dabei durch jeweils einen ersten und einen zweiten, gegenüberliegenden, Verbindungsabschnitt begrenzt, die über eine Biegung mit einem Winkel zwischen 70° und 100°, insbesondere zwischen 75° und 95°, gegenüber der Längsachse der geradlinig verlaufenden Leiterabschnitte um eine der ersten Seitenflächen ausgebildet werden. Zudem sind die ersten Verbindungsabschnitte der ersten und zweiten geradlinig verlaufenden Leiterabschnitte einteilig über einen Dachbereich miteinander verbunden und die jeweils zweiten Verbindungsabschnitte enden jeweils in einem Verschaltungsabschnitt, der in einem Winkel zwischen 40° und 80°, bevorzugt zwischen 50° und 70°, gegenüber der Längsachse des Verbindungsabschnitts um eine der zweiten Seitenflächen gebogen ist.
d) Assemblieren der Wicklungssegmente zu einer verteilten Statorwicklung.
e) Verschaltung der verteilten Statorwicklung
f) Assemblierung des Stator und eines Rotors zu einer Axialflussmaschine.

Die Assemblierung der Wicklungssegmente und gegebenenfalls der Kontaktierungssegmenten zu einer verteilten Statorwicklung kann dabei auch außerhalb des Stators erfolgen, beispielsweise in einer geeigneten Vorrichtung. Es kann beispielsweise auch vorgesehen sein, dass die Biegung der Verschaltungsabschnitte erst nach dem Assemblieren zu einer verteilten Statorwicklung in einer geeigneten Vorrichtung durch einen Twist- oder Verschränkungsprozess erfolgt. Genauso kann vorgesehen sein, dass die Verschaltung und/oder elektrische Prüfung der Statorwicklung vor dem Einbringen der Statorwicklung in den Stator erfolgt. Die offenen Aufnahmenuten von Axialflussmaschinen erlauben das Einfügen von Wicklungssegmenten auch nach der Assemblierung zur Statorwicklung. Gegenüber klassischen Hairpinwicklungen in Radialflussmaschinen hat die Verfahrensvariante damit eine wesentlich höhere Flexibilität bei der Ausführung. Es ist ebenfalls denkbar, die einzelnen Wicklungssegmente und gegebenenfalls Kontaktierungssegmente im Stator bzw. im Statorjoch zu einer verteilten Statorwicklung zu assemblieren und dort zu verschalten. Genauso ist es denkbar, dass die Biegung der Verschaltungsabschnitte erst nach dem Assemblieren im Stator bzw. Statorjoch beispielsweise durch einen geeigneten Twist- oder Verschränkungsprozess erfolgt.

Die Biegung der Wicklungssegmente kann beispielsweise mit für Hairpins bekannten Herstellungsverfahren (beispielsweise Gesenk- und/oder Freiformbiegen) erfolgen und die dargelegte Ausführungsform einfach darüber erreicht werden, dass in dem Schenkelbereich des Hairpins die "axialen Knicke" bzw. die axialen Verbindungsabschnitte eingebracht werden.

Der Vorteil dieser Prozessvariante ist, dass dabei die Nutzung von etablierten Prozessen für Hairpinwicklungen, die bisher üblicherweise bei Radialflussmaschinen genutzt werden, möglich ist, was eine Umsetzung der oben dargelegten Ausführungsform mit minimalen Aufwänden erlaubt, da auf bestehende Technologien zurückgegriffen werden kann, bzw. keine/kaum Neuentwicklungen notwendig sind.

Nach einer möglichen Ausführungsvariante des Verfahrens werden die Formstäbe derart gebogen und im Stator assembliert, dass sie beim Anordnen in den Aufnahmenuten des Stators jeweils zwei geradlinige Leiterabschnitten ausbilden. Zudem weisen die geradlinigen Leiterabschnitte beim radialen Austritt aus den Aufnahmenuten jeweils einen ersten und zweiten axial zur Zentralachse verlaufenden Verbindungabschnitt auf. Darüber hinaus weist jedes Wicklungssegment einen umfänglich verlaufenden Dachbereich zwischen entweder den zwei ersten oder zwei zweiten Verbindungsabschnitten auf. Dabei endet das Wicklungssegment in den jeweils gegenüberliegenden Verbindungsabschnitten in teilweise umfänglich verlaufende Verschaltungsabschnitten.

Nach einer möglichen Ausführungsvariante des Verfahrens, werden aus den Formstäben zusätzlich zu den Wicklungssegmenten auch Kontaktierungssegmente gebogen. Die Biegung der Kontaktierungssegmente erfolgt derart, dass sie einen geradlinigen Leiterabschnitt aufweisen, wobei der geradlinig verlaufende Leiterabschnitte durch jeweils einen ersten und einen zweiten axialen Verbindungsabschnitt begrenzt ist. Die Verbindungsabschnitt werden mit einem Winkel zwischen 70° und 100°, insbesondere zwischen 75° und 95°, gegenüber der Längsachse der geradlinig verlaufenden Leiterabschnitte um eine der ersten Seitenflächen ausgebildet. Zudem enden die jeweils ersten und zweiten Verbindungsabschnitte jeweils in einem Verschaltungsabschnitt und einem Kontaktierungsabschnitt, die in einem Winkel zwischen 40 und 80 °, bevorzugt zwischen 50° und 70°, gegenüber der Längsachse des

Verbindungsabschnitts um eine der zweiten Seitenflächen gebogen sind. Des Weiteren umfasst die mögliche Ausführungsvariante noch die weiteren Verfahrensschritte :
- Assemblieren der Wicklungssegmente und Kontaktierungssegmente zu einer verteilten Statorwicklung.
- Verschaltung der verteilten Statorwicklung.
- Assemblierung des Stator und eines Rotors zu einer Axialflussmaschine.

Nach einer möglichen Ausführungsvariante des Verfahrens weist der Stator einen Innendurchmesser und einen Außendurchmesser auf und bei der Assemblierung der Wicklungssegmente werden alle Dachbereiche entweder im Bereich des Innendurchmesser oder im Bereich des Außendurchmessers des Stators angeordnet und alle Verschaltungsabschnitte jeweils im Bereich des entgegengesetzten Durchmessers angeordnet. Dabei kann insbesondere auch vorgesehen sein, dass die Dachbereiche und die Kontaktierungsabschnitte der Kontaktierungssegmente im jeweils selben Bereich angeordnet werden.

Der Vorteil dieser Anordnung ist wie zuvor genannt.

Nach einer möglichen Ausführungsvariante des Verfahrens werden nach dem Schritt der Assemblierung der Wicklungssegmente im Stator eine Vielzahl an Flusssammelelementen an die Vielzahl an Statorzähnen angeordnet. Die Flusssammelelemente decken hierbei die Vielzahl an Wicklungssegmenten zumindest teilweise ab und können dabei insbesondere einen Außendurchmesser des Statorjochs überragen. Der Vorteil des Einsatzes von Flusssammelelemente ist wie bereits genannt. In der genannten Verfahrensvarianten könnten die Flusssammelelemente gleichzeitig als Haltelement für die Wicklungssegmente fungieren und diese beispielsweise zusätzlich gegen axiale Verschiebungen absichern.

Nach einer möglichen Ausführungsvariante des Verfahrens erfolgt die Biegung und Assemblierung der Wicklungssegmente im Stator derart, dass sich die Dachbereiche und die Verschaltungsabschnitte axial zu der den Aufnahmenuten gegenüberliegende Seite des Stators erstrecken. Dabei kann insbesondere auch vorgesehen sein, dass sie das Statorjoch auf dieser Seite axial überragen.

Der Vorteil dieser Anordnung ist wie zuvor genannt.

Nach einer möglichen Ausführungsvariante des Verfahrens wird die verteilte Wicklung außerhalb des Stators assembliert und verschaltet. Nach der Assemblierung und Verschaltung erfolgt eine elektrische Prüfung der Wicklung.

Nach einer möglichen Ausführungsvariante des Verfahrens werden vor der Assemblierung der Wicklungssegmenten in den Stator die Wicklungssegmente oder die Aufnahmenuten mit einer Zusatzisolierung versehen.

Die Erfindung ist nachfolgend anhand schematischer Zeichnungen in verschiedenen möglichen, nicht-einschränkenden Ausführungsbeispielen, beispielhaft erläutert. Es zeigen:
Fig. 1 eine allgemeine schematische Ansicht einer Axialflussmaschine gemäß dem Stand der Technik.
Fig. 2 eine weitere allgemeine schematische Ansicht einer Axialflussmaschine gemäß dem Stand der Technik.
Fig. 3 eine schematische Ansicht eines einzelnen möglichen Wicklungssegments.
Fig.4 eine schematische Ansicht eines einzelnen möglichen Kontaktierungssegments.
Fig. 5 eine schematische und vereinfachte Ansicht wie ein Wicklungssegment im Stator angeordnet sein kann.
Fig. 6 eine weitere schematische und vereinfachte Ansicht wie ein Wicklungssegment im Stator angeordnet sein kann.
Fig. 7 eine schematische Ansicht eines Stators einer Axialflussmaschine mit einer verteilten Statorwicklung.
Fig. 8 eine schematische Ansicht eines Stators einer Axialflussmaschine mit einer verteilten Statorwicklung und teilweise dargestellten Flusssammelelementen.

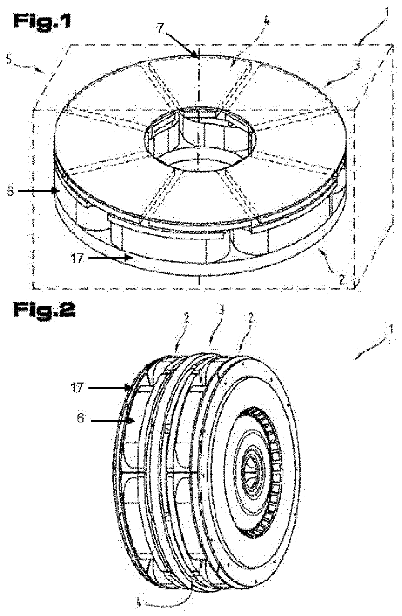

Fig. 1 zeigt eine Ausführungsvariante einer Axialflussmaschine 1 gemäß dem Stand der Technik umfassend zumindest einen Stator 2 und zumindest einen Rotor 3, der entlang einer Zentralachse 7 neben einem Stator 2 angeordnet und um die Zentralachse 7 drehbar ausgeführt ist. Wie im Stand der Technik üblich enthält der Stator eine konzentrierte Statorwicklung 6.

Auf dem Rotor 3 sind Magnete 4, beispielsweise Permanentmagnete, angeordnet. Der zumindest eine Stator 2 und der zumindest eine Rotor 3 können in einem fakultativ vorhandenen Motorengehäuse 5 angeordnet sein, wie dies in Fig. 1 strichliert angedeutet ist.

Nach anderen möglichen Ausführungsformen (nicht dargestellt) sind Anordnungen mit mehreren Rotoren möglich, zwischen denen beispielsweise jeweils ein Stator angeordnet ist.

Es können auch mehrere Statoren 2 angeordnet sein. In diesem Fall sind vorzugsweise alle Statoren 2 gleich ausgebildet, sodass die folgenden Ausführungen auch auf die gegebenenfalls weiter vorhandenen Statoren 2 angewandt werden können. Beispielsweise zeigt die Fig. 2 eine Ausführungsvariante der Axialflussmaschine 1, bei der nur ein Rotor 3 angeordnet ist. Der Rotor 3 ist - in der Axialrichtung betrachtet - zwischen zwei Statoren 2 angeordnet. Der Rotor 3 ist beidseitig mit mehreren Magneten 4 (Permanentmagnete) bestückt. Die beiden Statoren 2 sind so angeordnet, dass Rückschlusselemente bzw. Statorjoch 17 jeweils auf der vom Rotor 3 abgewandten Seite des Stators 2 angeordnet sind.

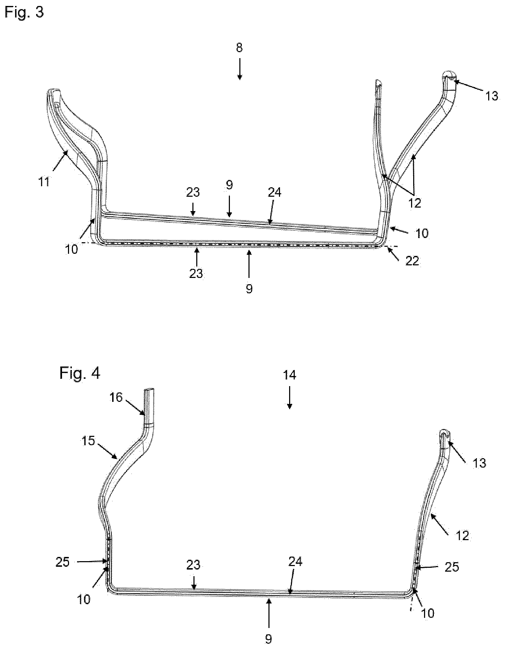

Figur 3 zeigt eine mögliche Ausführungsform eines einzelnen erfindungsgemäßen Wicklungssegments 8. Das Wicklungssegment 8 weist dabei zwei geradlinige Leiterabschnitten 9 auf, an die Leiterabschnitte 9 schließen dabei jeweils Verbindungsabschnitte 10 an, die über Biegung mit einem Winkel zwischen 70° und 100° gegenüber der Längsachse 22 der geradlinig verlaufenden Leiterabschnitte 9 um eine der ersten Seitenflächen 23 ausgebildet werden. Die Winkel zwischen den Verbindungsabschnitten und der Längsachse der Leiterabschnitte können dabei, wie gezeigt, auch unterschiedlich ausgebildet sein. Im Fall von Fig. 3 sind die ersten Seitenflächen 23 dabei die jeweils breiteren Seitenflächen des rechteckigen Leiterabschnitts. Zwei Verbindungsabschnitte 10 der jeweiligen Leiterabschnitte 9 sind dabei über einen Dachbereich 11 miteinander verbunden. Der Dachbereich wie auch der Verschaltungsabschnitt kann dabei einen gewölbten Bereich bzw. Biegungen aufweisen, die derart ausgebildet ist, dass sich bei späterer Assemblierung mehrere Wicklungssegmente kompakt zueinander anordnen lassen.

Zudem können im Dachbereich 11 eine oder mehrere weitere Biegungen vorgesehen sein, um beispielsweise einen Lagensprung der geradlinig verlaufenden Leiterabschnitte 9 zu erreichen. An den jeweils anderen Verbindungsabschnitten endet das Wicklungssegment jeweils in einem Verschaltungsabschnitt 12, der in einem Winkel zwischen 40° und 80° gegenüber der Längsachse des Verbindungsabschnitts 25 um die eine der zweiten Seitenflächen 24 gebogen ist. In dem gezeigten Fall handelt es sich bei den zweiten Seitenfläche 24 um die schmalere Seitenfläche.

Das in Figur 3 gezeigte Wicklungssegment ist eine mögliche, erfindungsgemäße Ausführungsform. Andere erfindungsgemäße Ausführungsformen können hiervon abweichen. Verschiedene Wicklungssegmente einer Wicklung sind unterschiedlich ausgeführt oder dimensioniert, entsprechend ihrer Lage in der Wicklung beziehungsweise im Stator sowie dem Wicklungsdesign im Allgemeinen.

Das Wicklungssegment ist in dem gezeigten Fall beispielsweise aus einem rechteckigen Kupferdraht, wobei der Kupferdraht auch herstellungsübliche Radien aufweisen kann, und von einer Isolierung ummantelt ist, ausgebildet. Anstatt Kupfer kommen auch andere dem Fachmann geläufige, gut leitfähige Materialien dafür in Frage, beispielsweise Aluminium. Die Isolierung besteht dabei dem Fachmann ebenfalls geläufigen Materialien, beispielsweise PEEK der PAI.

Der Verschaltungsabschnitte 12 verschiedener Wicklungssegmente 8 werden im Zuge der Assemblierung der Axialflussmaschine 1 miteinander, üblicherweise stoffschlüssig, verschaltet. Für eine gute Kontaktierung der verschiedener Verschaltungsabschnitte 12 ist es dabei notwendig die Isolierung am Ende der Verschaltungsabschnitte zu entfernen, sodass die Verschaltungsabschnitt abisolierte Enden 13 aufweisen. In Figur 3 weisen diese abisolierten Enden zudem symbolisch einen Schweißpunkt auf. Die Verfahren zum Abisolieren der Wicklungselemente sind dem Fachmann bekannt, dies kann beispielsweise mechanisch oder mittels Lasern durchgeführt werden.

Figur 4 zeigt eine mögliche Ausführungsform eines einzelnen erfindungsgemäßen Kontaktierungssegment 14. Das Kontaktierungssegment 14 weist dabei einen geradlinigen Leiterabschnitten 9 auf, an den Leiterabschnitt 9 schließen zwei Verbindungsabschnitte 10 an, die über Biegung mit einem Winkel zwischen 70° und 100° gegenüber der Längsachse der geradlinig verlaufenden Leiterabschnitte 9 um eine der ersten Seitenflächen ausgebildet werden. Die Winkel zwischen den Verbindungsabschnitten und der Längsachse der Leiterabschnitte können dabei, wie gezeigt, auch unterschiedlich ausgebildet sein. Im Fall von Fig. 4 sind die ersten Seitenflächen 23 dabei die jeweils breiteren Seitenflächen des rechteckigen Leiterabschnitts. Das Kontaktierungssegment 14 weist an jeweils einem Verbindungabschnitt jeweils einen Verschaltungsabschnitt 12, der um einen Winkel zwischen 40° und 80 ° gegenüber der Längsachse 25 des Verbindungsabschnitts 10 um die eine der zweiten Seitenflächen 24 gebogen ist. In dem gezeigten Fall handelt es sich bei den zweiten Seitenfläche 24 um die schmalere Seitenfläche. An dem jeweils anderen Verbindungsabschnitt weist das Kontaktierungssegment einen Kontaktierungsabschnitt 15, der um einen Winkel zwischen 40° und 80 ° gegenüber der Längsachse 25 des Verbindungsabschnitts 10 um die der zweiten Seitenflächen 24 gebogen ist. Sowohl die Verschaltungsabschnitte 12 als auch die Kontaktierungsabschnitte 15 weisen hierbei abisolierte Enden 13,16 auf. In diesem Fall kann der Verlauf der Längsachse 25 der beiden Verbindungsabschnitte 10 variieren - in diesem Fall ist dabei die Längsachse 25 des Verbindungsabschnitts 10 gemeint, der an den jeweiligen Kontaktierungsabschnitt 15 bzw. Verschaltungsabschnitt 12 angrenzt.

Sowohl der Kontaktierungsabschnitt 15 als auch der Verschaltungsabschnitt 12 kann dabei einen gewölbten Bereich oder weitere Biegungen aufweisen, der derart ausgebildet ist, dass sich bei späterer Assemblierung mehrere Wicklungssegmente kompakt zueinander anordnen lassen.

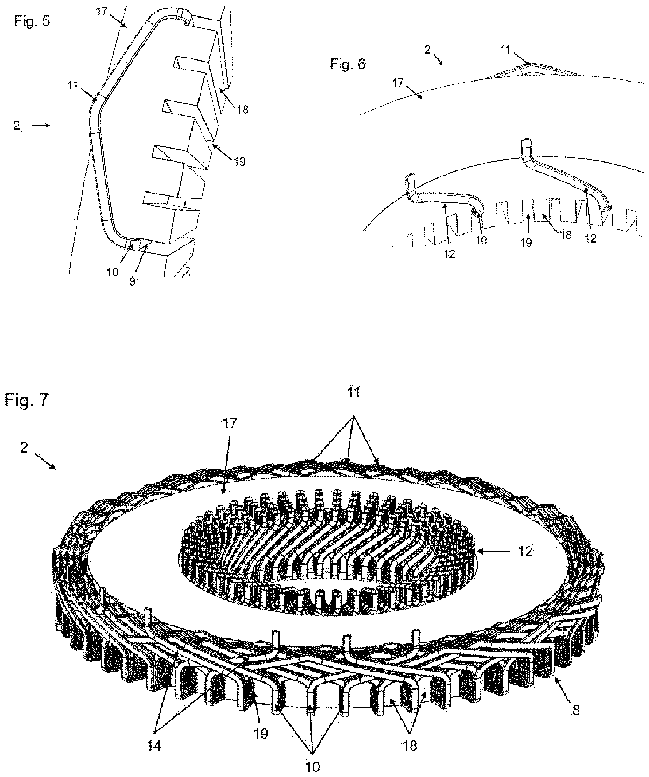

Figur 5 und Figure 6 zeigen einen vereinfachten Ausschnitt eines Stators mit einem einzelnen erfindungsgemäßes Wicklungssegment 8, das in den Aufnahmenuten 19 eines Statorjochs 17 angeordnet ist. Zwischen den Aufnahmenuten 19 sind hierbei Statorzähne 18 umfänglich verteilt angeordnet. Die Statorzähne befinden sich hierbei auf der dem Rotor (nicht gezeigt) zugewandten Seite des Stators 2. Zur vereinfachten Darstellung sind die übrigen Wicklungssegmente 8 bzw. Kontaktierungssegmente 14 und andere Details des Stators 2 nicht gezeigt. Die geradlinigen Leiterabschnitte 9 erstrecken sich hierbei über die gesamte radiale Länge der Aufnahmenut 19, bei radialem Austritt aus der Aufnahmenut 19 gehen die geradlinigen Leiterabschnitte des Wicklungssegment 8 dabei in axial verlaufende Verbindungabschnitte 10 über. Die Länge bzw. Ausprägung der axialen Verbindungabschnitte ist dabei von mehreren Faktoren abhängig, wie beispielsweise der axialen Position des Wicklungssegments 8 in der Aufnahmenute 19 und dem Wicklungsdesign an sich. Auf einer radialen Seite des Statorjochs 17, also im Bereich des Innendurchmesser bzw. Außendurchmessers, gehen die axialen Verbindungabschnitte 10 dabei in einen Dachbereich 11 über, der die beiden axialen Verbindungabschnitte 10 auf derselben radialen Seite des Statorjochs 17 miteinander verbindet, wobei der Dachbereich 11 sich umfänglich entlang des Statorjochs 17 erstreckt. Der Dachbereich 11 weist dabei üblicherweise auch eine axiale Erstreckung aus und kann das Statorjoch 17 auf der den Aufnahmenuten abgewandten Seite beispielsweise auch überragen. Auf der anderen radialen Seite des Statorjochs 17 gehen die axialen Verbindungsabschnitte 10 dabei jeweils in umfänglich verlaufende Verschaltungsabschnitte 12 über. Die Verschaltungsabschnitte 12 weisen dabei üblicherweise auch eine axiale Erstreckung aus und können beispielsweise das Statorjoch 17 auf der den Aufnahmenuten 19 abgewandten Seite überragen. Hierzu kann ich auch eine weitere Biegung des Verschaltungsabschnitt 12 vorgesehen sein, sodass dieser zum Ende hin einen weitestgehend axialen Verlauf aufweist. Dies kann für eine gute Zugänglichkeit für das Verschalten der Verschaltungsabschnitte 12 verschiedener Wicklungssegmente 8, beispielsweise mittels Laserschweißen, sehr günstig sein. Es können dabei auch alle Dachbereiche 11 der Wicklungssegmente 8 auf derselben radialen Seite des Statorjochs 17 angeordnet sein und alle Verschaltungsabschnitte 12 auf der gegenüberliegenden radialen Seite des Statorjochs 17 angeordnet sein - Je nach Wicklungsdesign sind jedoch auch andere Varianten denkbar.

Figur 7 zeigt eine mögliche Ausführungsform eines erfindungsmäßen Stators 2, zur vereinfachten Darstellung ist der Rotor dabei nicht gezeigt. Figur 7 zeigt dabei einen Stator 2 mit einem scheibenförmigen Statorjoch 17 und mehrere mit dem Statorjoch 17 verbundene Statorzähne 18. Die Statorzähne 18 sind hierbei auf der dem Rotor (nicht gezeigt) zugewandten Seite des Statorjochs 17 angeordnet und durch eine Vielzahl von umfänglich verteilten Aufnahmenuten 19 voneinander getrennt. In den Aufnahmenuten 19 sind dabei eine Vielzahl an Wicklungssegmenten 8 und Kontaktierungssegmente 12 angeordnet. Die Ausführungsform der Wicklungssegmente 8 und der Kontaktierungssegmente 12 kann sich dabei unter anderem abhängig von ihrer axialen Lage in den Aufnahmenuten 19 und dem Wicklungsdesign unterscheiden. Die Wicklungssegmente 8 und Kontaktierungssegmente 12 sind hierbei derart angeordnet bzw. werden derart miteinander verschaltet, dass sich eine verteilte Statorwicklung ausbildet. Die Kontaktierungsabschnitte 15 der Kontaktierungssegmente 12 werden darüber hinaus zur Bestromung der Statorwicklung beispielsweise noch mit Busbars kontaktiert (nicht gezeigt).

Figur 8 zeigt hierbei ebenso eine mögliche Ausführungsform eines erfindungsmäßen Stators 2, wobei hier die dem Rotor (nicht gezeigt) zugewandte Seite des Stators 2 gezeigt ist. Wie in Figur 8 gezeigt kann zusätzlich vorgesehen sein, dass an den Statorzähnen eine Vielzahl an Flusssammelelementen 21 angeordnet sind, welche die Wicklung beziehungsweise die Vielzahl an Wicklungssegmenten 8 zumindest teilweise zum Rotor (nicht gezeigt) hin abdecken. Es kann hierbei auch vorgesehen sein, dass die Flusssammelelemente den Außendurchmesser des Statorjochs 17 überragen. In Figur 8 sind dabei einige Flusssammelelemente 21 für eine bessere Sichtbarkeit anderer Elemente des Stators 2 nicht gezeigt. In Figur 8 ist dabei ebenfalls eine Zusatzisolation 20 gezeigt. Bei dieser Zusatzisolation 20 kann es sich beispielsweise um eine Nutisolation in Form eines Nutpapiers handeln, dass alle geradlinigen Leiterabschnitte 9, die in einer Aufnahmenut 19 angeordnet sind, umschlingt und diese zum Statorjoch, den Statorzähnen und dem Flusssammelelement hin isoliert. Genauso kann die Zusatzisolation 20 aber auch zwischen den einzelnen Lagen der geradlinigen Leiterabschnitte 9 in derselben Aufnahmenut 19 vorgesehen sein. Neben dem Einsatz von Nutpapier können auch andere, dem Fachmann bekannte, Formen von Zusatz- bzw. Wicklungsisolationen vorgesehen sein.

## Patentansprüche

1. Axialflussmaschine mit einem entlang einer Zentralachse neben einem Stator angeordneten und um die Zentralachse drehbar ausgeführten Rotor, und wobei der Stator ein scheibenförmiges Statorjoch und mehrere mit dem Statorjoch verbundene Statorzähne aufweist, wobei die Statorzähne auf der dem Rotor zugewandten Seite des Statorjochs angeordnet sind und durch eine Vielzahl von umfänglich verteilten Aufnahmenuten voneinander getrennt sind, und eine Vielzahl an Wicklungssegmenten in den Aufnahmenuten angeordnet sind, **dadurch gekennzeichnet, dass** ein Wicklungssegment jeweils zwei geradlinige Leiterabschnitten, die in unterschiedlichen Aufnahmenuten angeordnet sind, umfasst und wobei diese Leiterabschnitte nach dem radialen Austritt aus den Aufnahmenuten jeweils einen ersten, radial inneren, und zweiten, radial äußeren, axial verlaufenden Verbindungabschnitt aufweisen und wobei jedes Wicklungssegment einen umfänglich verlaufenden Dachbereich zwischen entweder den jeweils ersten oder jeweils zweiten Verbindungsabschnitten aufweist, und wobei jedes Wicklungssegment in den jeweils gegenüberliegenden Verbindungsabschnitten in teilweise umfänglich verlaufende Verschaltungsabschnitte endet und wobei die teilweise umfänglich verlaufenden Verschaltungsabschnitte verschiedener Wicklungssegmente derart miteinander verschaltet werden, dass sich eine verteilte Statorwicklung ausbildet.

2. Axialflussmaschine nach Anspruch 1, **dadurch gekennzeichnet, dass** in manchen der Aufnahmenuten darüber hinaus Kontaktierungssegmente angeordnet sind, wobei ein Kontaktierungssegment einen geradlinigen Leiterabschnitten, der in einer der Aufnahmenuten angeordnet ist, umfasst, und wobei der Leiterabschnitt nach dem radialen Austritt aus den Aufnahmenuten jeweils einen ersten, radial inneren, und zweiten, radial äußeren, axial verlaufenden Verbindungabschnitt aufweist und wobei einer der Verbindungsabschnitten in einem teilweise umfänglich verlaufende Verschaltungsabschnitte endet und wobei der andere Verbindungsabschnitt in einem teilweise umfänglich verlaufende Kontaktierungsabschnitt endet und wobei die teilweise umfänglich verlaufenden Verschaltungsabschnitte der Kontaktierungssegmente mit den Verschaltungsabschnitten der Wicklungssegmente derart verschaltet werden, dass sich eine verteilte Statorwicklung ausbildet.

3. Axialflussmaschine nach Anspruch 1 oder 2, **dadurch gekennzeichnet, dass** der scheibenförmige Stator einen Innendurchmesser und einen Außendurchmesser aufweist und wobei alle umfänglich verlaufenden Dachbereiche entweder im Bereich des Innendurchmesser oder im Bereich des Außendurchmessers des Stators angeordnet sind und alle Verschaltungsabschnitte jeweils im Bereich des entgegengesetzten Durchmessers angeordnet sind, insbesondere wobei die umfänglich verlaufenden Dachbereiche und die Kontaktierungsabschnitte der Kontaktierungssegmente im jeweils selben Bereich angeordnet sind.

4. Axialflussmaschine nach einem der vorhergehenden Ansprüche, **dadurch gekennzeichnet, dass** an der dem Rotor zugewandten Seite der Statorzähne eine Vielzahl an Flusssammelelementen angeordnet sind und wobei die Flusssammelelemente die Vielzahl an Wicklungssegmenten zumindest teilweise zum Rotor hin abdecken, insbesondere wobei die Flusssammelelemente einen Außendurchmesser des Statorjochs überragen.

5. Axialflussmaschine nach einem der vorhergehenden Ansprüche, **dadurch gekennzeichnet, dass** sich die umfänglich verlaufenden Dachbereiche und die teilweise umfänglich verlaufenden Verschaltungsabschnitte axial zur dem Rotor abgewandten Seite des Stators erstrecken, insbesondere wobei sie das Statorjoch auf dieser Seite axial überragen.

6. Axialflussmaschine nach einem der vorhergehenden Ansprüche, **dadurch gekennzeichnet, dass** die Aufnahmenuten in Bezug auf die Zentralachse radial schräg angeordnet sind, insbesondere wobei die Schrägung der Aufnahmenuten derart ausfällt, dass ein Nutversatz von 1 bis 3 Nuten, im Vergleich zu einer radial diametralen Nutposition bei, in Bezug auf die Zentralachse, radial verlaufenden Aufnahmenuten entsteht.

7. Axialflussmaschine nach einem der vorhergehenden Ansprüche, **dadurch gekennzeichnet, dass** die Wicklungssegmente durch vorbestimmte elektrische Verbindungen eine Statorwicklung ausbilden, und welche Statorwicklung mehrere in Axialrichtung zur Zentralachse unmittelbar benachbarte Lagen aus den, in den Aufnahmenuten angeordneten, Leiterabschnitten umfasst, und diese Leiterabschnitte durch die vorbestimmten elektrischen Verbindungen vorbestimmte elektrische Strompfade in der Statorwicklung ausbilden, und der Stator in Kreisumfangsrichtung verteilt mehrere magnetische Polabschnitte (N, S) definiert, wobei die Statorwicklung wenigstens eine Phasenwicklung umfasst, welche wenigstens eine Phasenwicklung zumindest einen Strompfad umfasst,
und jeder Strompfad einen, durch die Kontaktierungsabschnitte der Kontaktierungssegmente gebildeten, Eingangsanschluss, einen Strompfad-Anfang, ein Strompfad-Ende und einen Ausgangsanschluss aufweist, wobei
der Strompfad mit seinem Strompfad-Anfang ausgehend von einer der axial äußeren Lagen beginnt und sodann lagenweise wechselnd sowie in Kreisumfangsrichtung wenigstens über einen Teilabschnitt des Kreisumfanges des Stators verlaufend bis zur axial innersten Lage verläuft,
wobei der Strompfad bei jedem dieser Lagenwechsel von einem der magnetischen Polabschnitte (S oder N) des Stators zu einem in Kreisumfangsrichtung unmittelbar benachbarten Polabschnitt (N oder S) übergeht, und der Strompfad dabei die Lagen in fortwährend gleichbleibender axialer Richtung um eine Lagensprungweite "Eins" wechselt, bis die axial innerste Lage erreicht ist, und wobei die Verlaufsrichtung des elektrischen Strompfades bei der axial innersten Lage in Bezug auf die Kreisumfangsrichtung durch einen Umkehrungs-Leiterabschnitt umgekehrt wird und sodann der elektrische Strompfad ausgehend von der axial innersten Lage die Lagen lagenweise wechselnd sowie in Kreisumfangsrichtung wenigstens über einen Teilabschnitt des Kreisumfanges des Stators verlaufend und dabei in axialer Richtung um nur eine Lage versetzt zurück in Richtung zu einer axial weiter außen liegenden Lage verläuft.

8. Verfahren zur Herstellung einer Axialflussmaschine umfassend die folgenden Schritte:
a) Bereitstellen von geraden Formstäben mit rechteckigem Querschnitt mit zwei ersten gegenüberliegenden und zwei zweiten gegenüberliegenden Seitenflächen.
b) Bereitstellen eines Stator, welcher ein scheibenförmiges Statorjoch und mehrere mit dem Statorjoch verbundene Statorzähne aufweist, wobei die Statorzähne auf einer Stirnseite des Statorjochs angeordnet sind und durch eine Vielzahl von umfänglich verteilten Aufnahmenuten voneinander getrennt sind.
c) Biegen der Formstäbe zu Wicklungssegmenten derart, dass die Wicklungssegmente einen ersten und einen zweiten geradlinigen Leiterabschnitt aufweisen, wobei die geradlinig verlaufenden Leiterabschnitte durch jeweils einen ersten und einen zweiten, gegenüberliegenden, Verbindungsabschnitt begrenzt sind, die über eine Biegung mit einem Winkel zwischen 70° und 100°, insbesondere 75° und 95°, gegenüber der Längsachse der geradlinig verlaufenden Leiterabschnitte um eine der ersten Seitenflächen ausgebildet werden, und wobei die ersten Verbindungsabschnitte der ersten und zweiten geradlinig verlaufenden Leiterabschnitte einteilig über einen Dachbereich miteinander verbunden sind und wobei die jeweils zweiten Verbindungsabschnitte jeweils in einem Verschaltungsabschnitt enden, der in einem Winkel zwischen 40 und 80 °, bevorzugt zwischen 50° und 70°, gegenüber der Längsachse des Verbindungsabschnitts um eine der zweiten Seitenflächen gebogen ist.
d) Assemblieren der Wicklungssegmente zu einer verteilten Statorwicklung.
e) Verschaltung der verteilten Statorwicklung
f) Assemblierung des Stator und Rotors zu einer Axialflussmaschine.

9. Verfahren nach Anspruch 8, **dadurch gekennzeichnet, dass** die Formstäbe derart gebogen und im Stator assembliert werden, dass sie beim Anordnen in den Aufnahmenuten des Stators jeweils zwei geradlinige Leiterabschnitten ausbilden und wobei die geradlinigen Leiterabschnitte beim radialen Austritt aus den Aufnahmenuten jeweils einen ersten und zweiten axial zur Zentralachse verlaufenden Verbindungabschnitt aufweisen und wobei jedes Wicklungssegment einen umfänglich verlaufenden Dachbereich zwischen entweder den zwei ersten oder zwei zweiten Verbindungsabschnitten aufweist, und wobei das Wicklungssegment in den jeweils gegenüberliegenden Verbindungsabschnitten in teilweise umfänglich verlaufende Verschaltungsabschnitte endet.

10. Verfahren nach Anspruch 8 oder 9, **dadurch gekennzeichnet, dass** aus den Formstäben zusätzlich zu den Wicklungssegmenten auch Kontaktierungssegmente gebogen werden, wobei die Biegung der Kontaktierungssegmente derart erfolgt, dass sie einen geradlinigen Leiterabschnitt aufweisen, wobei der geradlinig verlaufende Leiterabschnitte durch jeweils einen ersten und einen zweiten Verbindungsabschnitt begrenzt ist, die mit einem Winkel zwischen 70° und 100°, insbesondere zwischen 75° und 95°, gegenüber der Längsachse des geradlinig verlaufenden Leiterabschnitts um eine der ersten Seitenflächen ausgebildet werden, und wobei die jeweils ersten und zweiten Verbindungsabschnitte jeweils in einem Verschaltungsabschnitt und einem Kontaktierungsabschnitt enden, die in einem Winkel zwischen 40 und 80 °, bevorzugt zwischen 50° und 70°, gegenüber der Längsachse des Verbindungsabschnitts um eine der zweiten Seitenflächen gebogen sind und des Weiteren umfassend die folgenden Verfahrensschritte:
• Assemblieren der Wicklungssegmente und Kontaktierungssegmente zu einer verteilten Statorwicklung.
• Verschaltung der verteilten Statorwicklung.
• Assemblierung des Stator und eines Rotors zu einer Axialflussmaschine.

11. Verfahren nach einem der vorhergehenden Ansprüche, **dadurch gekennzeichnet, dass** der Stator einen Innendurchmesser und einen Außendurchmesser aufweist und wobei bei der Assemblierung der Wicklungssegmente alle Dachbereiche entweder im Bereich des Innendurchmesser oder im Bereich des Außendurchmessers des Stators angeordnet werden und alle Verschaltungsabschnitte jeweils im Bereich des entgegengesetzten Durchmessers angeordnet werden, insbesondere wobei die Dachbereiche und die Kontaktierungsabschnitte der Kontaktierungssegmente im jeweils selben Bereich angeordnet werden.

12. Verfahren nach einem der vorhergehenden Ansprüche, **dadurch gekennzeichnet, dass** nach dem Schritt der Assemblierung der Wicklungssegmente im Stator eine Vielzahl an Flusssammelelementen an die Vielzahl an Statorzähnen angeordnet werden, wobei die Flusssammelelemente die Vielzahl an Wicklungssegmenten zumindest teilweise abdecken, insbesondere wobei die Flusssammelelemente einen Außendurchmesser des Statorjochs überragen.

13. Verfahren nach einem der vorhergehenden Ansprüche, **dadurch gekennzeichnet, dass** die Biegung und Assemblierung der Wicklungssegmente im Stator derart erfolgt, dass sich die Dachbereiche und die Verschaltungsabschnitte axial zur den Aufnahmenuten gegenüberliegende Seite des Stators erstrecken, insbesondere wobei sie das Statorjoch auf dieser Seite axial überragen.

14. Verfahren nach einem der vorhergehenden Ansprüche, **dadurch gekennzeichnet, dass** die verteilte Wicklung außerhalb des Stators assembliert und verschaltet wird, und wobei nach Assemblierung und Verschaltung eine elektrische Prüfung der Wicklung erfolgt.

15. Verfahren nach einem der vorhergehenden Ansprüche, **dadurch gekennzeichnet, dass** vor der Assemblierung der Wicklungssegmenten in den Stator die Wicklungssegmente oder die Aufnahmenuten mit einer Zusatzisolierung versehen werden.
